# EUROPEAN PATENT APPLICATION

(11) **EP 0 629 072 A1**
(43) Date of publication of application: **14.12.1994**
(21) Application number: 94850084.8
(22) Date of filing: 17.05.1994
(51) Int. Cl.: H04M 15/00, H04M 3/38, H04M 17/00

(54) **Arrangement in a telephone system for controlling debiting of services**

(30) Priority: 11.06.1993 SE 9302002
(71) Applicant: TELIA AB, S-123 86 Farsta (SE)
(72) Inventor: Hakansson, Per, S-216 19 Malmö (SE); Hurtsén, Björn, S-237 41 Bjärred (SE); Gladh, Thomas, S-211 50 Malmö (SE); Hultman, Jens, S-211 47 Malmö (SE); Nilsson, Jens, S-212 17 Malmö (SE)
(74) Representative: Karlsson, Berne

(57) **Abstract**

The invention relates to an arrangement in a telephone system for controlling debiting of services. The arrangement comprises a telephone set (1) for each subscriber and call-debiting equipment (4) arranged in a respective telephone exchange (3) from which different services can be ordered. According to the invention, the call-debiting equipment (4) is arranged to receive control signals from the telephone set for controlling the utilization of ordered services in dependence on the cost debited therefor. The telephone set (1) comprises elements (2) for taking codes which constitute control signals to the call-debiting equipment. The code-taking elements are preferably constituted by the conventional keypad of the telephone set.

## Description

### FIELD OF THE INVENTION

The present invention relates to an arrangement in a telephone system for controlling debiting of services. The invention allows the subscriber to maximize his costs and to bar certain services which can be ordered from the telecommunications office. By taking codes on his telephone set, the subscriber can control the call-debiting equipment and which services can be ordered.

### PRIOR ART

It is already known to control the costs in a telephone system.

US 5,109,401 describes a device for controlling call costs. The technique described relates to radio telecommunications. The device can inform the user if the cost for a call exceeds a predetermined cost. The call can be stopped in the case of this cost being exceeded. The user can also be informed if the accumulated costs exceed a predetermined cost. Here, too, the communication can be barred if this cost is exceeded.

US 5,138,650 relates to a method for the utilization of a wireless telephone. The subscribers communicate via base stations connected to a public telephone network. A network control unit is connected to a debiting block. A subscriber is allowed a credit for making a call possible and can be warned if the credit comes to an end so that he has the possibility of buying more credit.

The present invention solves the problem of directly controlling the costs in the telephone system via a conventional telephone set. By taking codes via the keypad of the telephone set, the costs for a particular time period or for a certain service can be maximized and services can be barred permanently or temporarily with the aid of further code-taking.

### SUMMARY OF THE INVENTION

The present invention thus provides an arrangement in a telephone system for controlling debiting of services. The arrangement comprises telephone sets for each subscriber and call-debiting equipment arranged in a respective telephone exchange from which different services can be ordered. According to the invention, the call-debiting equipment is arranged to receive control signals from the telephone set for controlling the utilization of ordered services in dependence on the cost debited therefor.

The telephone set comprises elements for taking codes which constitute control signals to the call-debiting equipment. The code-taking elements are preferably constituted by the conventional keypad of the telephone set.

The invention is specified in greater detail in the patent claims which follow.

### BRIEF DESCRIPTION OF THE DRAWINGS

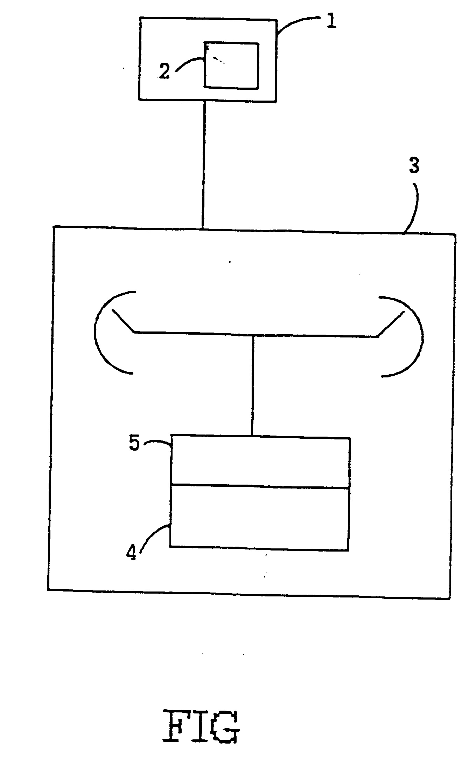

The invention will now be described in detail with reference to the attached drawings, in which the single figure is a block diagram of a preferred embodiment.

### DETAILED DESCRIPTION OF A PREFERRED EMBODIMENT OF THE INVENTION

As a private individual, one sometimes wishes to limit one's costs for a telephone or the utilization of the telephone by some member of the family. Today's telephone exchanges have a number of different services which can be ordered and which are associated with costs over and above the normal marking costs. There is therefore a requirement for being able to control the costs and the utilization of the services. Businesses also want to have the possibility of barring certain functions in the telephone network so that they will not be misused by the employees.

The figure shows a preferred embodiment of the present invention. The subscriber has a telephone set 1 with associated keypad 2. The telephone set can be conventional per se. The telephone set can also be connected to the telephone network via a private branch exchange, not shown.

The subscriber is connected to a telephone exchange 3 which comprises routing equipment in a known manner and call-debiting equipment 4. According to the invention, the telephone exchange also comprises decoding equipment 5 which provides the possibility of controlling the call-debiting equipment 4.

Different services are ordered by taking codes on the keypad 2 of the telephone set in a known manner. The present invention provides a new service which enables the utilization of other services to be controlled. New codes are thus associated with the new service.

The service can be designed in such a manner that the utilization of the remaining services can be barred on the basis of the debited costs. For example, it is possible to bar with respect to maximum monthly cost, maximum marking cost, barring of certain services, maximum service cost, maximum cost for each use of a special service. It is possible to choose whether to bar a service permanently or whether it should be possible to gain access to the service by further taking of a code, a so-called authorization code or a password.

The service according to the invention is suitably associated with a fixed cost.

The present invention thus allows the subscriber to control his costs in a simple manner. This type of service does not significantly increase the traffic in the network, but is valuable since the businesses and private individuals will utilize more expensive services which it will not be possible to misuse or on which it will be possible to have stricter cost control.

Whilst the central idea in the concept of the invention is control of the debited cost, a number of different ways of barring the services are of course apparent to an expert in the field. The scope of the invention is limited only by the claims which follow.

## Claims

1. Arrangement in a telephone system for controlling debiting of services, comprising a telephone set (1) for each subscriber and call-debiting equipment (4) arranged in a respective telephone exchange (3) from which different services can be ordered, characterized in that the call-debiting equipment (4) is arranged to receive control signals from the telephone set for controlling the utilization of ordered services in dependence on the cost debited therefor.

2. Arrangement according to Claim 1, characterized in that the telephone set comprises elements (2) for taking codes which constitute control signals to the call-debiting equipment.

3. Arrangement according to Claim 2, characterized in that the code-taking elements are constituted by the conventional keypad (2) of the telephone set.

4. Arrangement according to any of the preceding claims, characterized in that the cost over a specified time period can be maximized to a sum determined by the subscriber.

5. Arrangement according to any of the preceding claims, characterized in that certain services determined by the subscriber can be barred.

6. Arrangement according to Claim 5, characterized in that services can be barred permanently or with a possibility of access to the service by taking a code determined by the subscriber.

7. Arrangement according to any of the preceding claims, characterized in that the cost for each time a service is used can be maximized.
